# EUROPÄISCHE PATENTSCHRIFT

(11) **EP 2 898 402 B1**
(45) Veröffentlichungstag und Bekanntmachung des Hinweises auf die Patenterteilung: **23.01.2019**
(21) Anmeldenummer: 13763249.3
(22) Anmeldetag: 17.09.2013
(51) Int. Cl.: G06F 3/0488, H04N 21/485

(54) **CLIENTVORRICHTUNG, ÜBERWACHUNGSSYSTEM, VERFAHREN ZUM ANZEIGEN VON BILDERN AUF EINEM BILDSCHIRM SOWIE COMPUTERPROGRAMM**
CLIENT DEVICE, MONITORING SYSTEM, METHOD FOR DISPLAYING IMAGES ON A SCREEN AND COMPUTER PROGRAM
DISPOSITIF CLIENT, SYSTÈME DE SURVEILLANCE, PROCÉDÉ D'AFFICHAGE D'IMAGES SUR UN ÉCRAN AINSI QUE PROGRAMME D'ORDINATEUR

(30) Priorität: 24.09.2012 DE 102012217151
(43) Veröffentlichungstag der Anmeldung: 29.07.2015
(73) Patentinhaber: Robert Bosch GmbH, 70442 Stuttgart (DE)
(72) Erfinder: HEIGL, Stephan, 30173 Hannover (DE); GOTTSCHLAG, Daniel, 90419 Nuernberg (DE)
(86) Internationale Anmeldenummer: PCT/EP2013/069254
(87) Internationale Veröffentlichungsnummer: WO 2014/044668

(56) Entgegenhaltungen:
- WO-A1-02/33976
- WO-A2-01/69911
- US-A1- 2008 060 011
- US-A1- 2011 085 016

## Beschreibung

Die Erfindung betrifft eine Clientvorrichtung mit einem Bildschirm, mit einer Anzeigeeinrichtung zur Anzeige einer ersten Bilddarstellung auf dem Bildschirm, wobei die erste Bilddarstellung einen IST-Bildausschnitt in einem IST-Auswahlbereich aus einem Bildkoordinatensystem zeigt, mit einer Auswahleinrichtung, wobei die Auswahleinrichtung zur Auswahl eines SOLL-Auswahlbereichs aus dem Bildkoordinatensystem ausgebildet ist, mit einer Kommunikationseinrichtung, wobei die Kommunikationseinrichtung zur Anforderung und zum Empfang eines SOLL-Bildausschnitts des SOLL-Auswahlbereichs ausgebildet ist, wobei die Anzeigeeinrichtung ausgebildet ist, in einer zweiten Bilddarstellung den IST-Bildausschnitt lagerichtig und größenrichtig in dem SOLL-Auswahlbereich anzuzeigen und in einer weiteren Bilddarstellung den SOLL-Bildausschnitt lagerichtig und größenrichtig in dem SOLL-Auswahlbereich anzuzeigen. Die Erfindung betrifft auch ein Überwachungssystem mit der Clientvorrichtung, ein Verfahren mit der Clientvorrichtung sowie ein Computerprogramm.

### Stand der Technik

Die Überwachung von öffentlichen oder privaten Plätzen, Gebäuden, Räume o. ä. durch Überwachungskameras ist heute weit verbreitet. Die Überwachungskameras sind z. B. als eine starre Videokamera, welche auf einen Raumbereich o. ä. fokussiert ist, oder als eine ansteuerbare PTZ-Videokamera (Pan/Tilt/Zoom) ausgebildet. Zur Sichtung der mittels der Überwachungskamera getätigten Videoaufzeichnungen werden diese üblicherweise auf ein Endgerät mit einem Bildschirm wiedergegeben.

Beispielsweise beschreibt die DE 102 22 203 A1, die wohl den nächstkommenden Stand der Technik bildet, ein Bildüberwachungssystem mit einem Bildgeber, einer Auswerteeinheit und einer Anzeige. Weiterhin ist ein Eingabemittel vorhanden, das manuell bewegbar ist und damit zur Eingabe von Zeichnungen und Auswahl von Menüpunkten in einer Benutzerführung geeignet ist. Bei der Arbeit mit dem Bildüberwachungssystem kann eine kontextsensitive Hilfe auf der Anzeige ausgebildet werden.

Aus der WO 01/69911 A2 ist ein interaktives Multimediasystem bekannt, um es einem Benutzer zu erlauben, eine Ansicht in einem größeren visuellen Bild auszuwählen. Eine Rendering-Vorrichtung umfasst eine Benutzereingabeeinrichtung zum Empfangen von Benutzeranweisungen für die Ansichtsauswahl, so dass die Rendering-Vorrichtung einen Animationsinhalt liefert und selektiv einzeln komprimierte Videostreams dekomprimiert, um einen Ansicht auf Basis der Ansichtsauswahl-Anweisungen des Benutzers zu erzeugen.

### Offenbarung der Erfindung

Im Rahmen der Erfindung wird eine Clientvorrichtung mit den Merkmalen des Anspruchs 1, ein Überwachungssystem mit den Merkmalen des Anspruchs 9, ein Verfahren zum Anzeigen von Bildern auf einem Bildschirm mit den Merkmalen des Anspruchs 11 sowie ein Computerprogramm mit den Merkmalen des Anspruchs 12 vorgeschlagen. Vorteilhafte oder bevorzugte Ausführungsformen ergeben sich aus den Unteransprüchen, der nachfolgenden Beschreibung sowie den beigefügten Figuren.

Erfindungsgemäß wird eine Clientvorrichtung mit einem Bildschirm und mit einer Anzeigeeinrichtung vorgeschlagen, wobei die Anzeigeeinrichtung zur Anzeige einer ersten Bilddarstellung auf dem Bildschirm ausgebildet ist. Die erste Bilddarstellung zeigt einen IST-Bildausschnitt in einem IST-Auswahlbereich aus einem Bildkoordinatensystem für ein Bild. Der IST-Bildausschnitt zeigt somit einen Teilbereich des im Bildkoordinatensystem abgebildeten Bildes, wobei der Teilbereich des IST-Bildausschnitts durch den im Bildkoordinatensystem angeordneten IST-Auswahlbereich bestimmt ist. Insbesondere umfasst das Bildkoordinatensystem die Gesamtgröße des durch ein Gerät aufgenommenen Bildes. Besonders bevorzugt handelt es sich bei dem Bildkoordinatensystem um ein Pixelkoordinatensystem mit einer Bildauflösung von z. B. 1920x1080P.

Die Clientvorrichtung umfasst eine Auswahleinrichtung, wobei die Auswahleinrichtung zur Auswahl eines SOLL-Auswahlbereichs aus dem Bildkoordinatensystem ausgebildet ist. Durch den im Bildkoordinatensystem angeordneten SOLL-Auswahlbereich wird ein SOLL-Bildausschnitt bestimmt, wobei der SOLL-Bildausschnitt einen Teilbereich des im Bildkoordinatensystem abgebildeten Bildes zeigt. Insbesondere ist der SOLL-Bildausschnitt zum IST-Bildausschnitt verlagert und/oder skaliert, insbesondere vergrößert oder verkleinert. Die Auswahl des SOLL-Auswahlbereichs erfolgt über eine manuelle Befehlseingabe. Insbesondere handelt es sich bei der Auswahl des SOLL-Auswahlbereichs ausgehend von dem IST-Auswahlbereich um genau eine Befehlseingabe.

Die Clientvorrichtung umfasst eine Kommunikationseinrichtung, wobei die Kommunikationseinrichtung zur Anforderung und zum Empfang des SOLL-Bildausschnitts des SOLL-Auswahlbereichs ausgebildet ist. Die von der Kommunikationseinrichtung ausgegebene Anforderung umfasst insbesondere Angaben zum SOLL-Auswahlbereich in dem Bildkoordinatensystem. Die Datenübertragung der Anforderung und des Empfangs der SOLL-Bildausschnitts erfolgt vorzugsweise über ein Netzwerk. Bei dem Netzwerk kann es sich um ein kabelgebundenes Netzwerk, wie z. B. ein LAN oder ein Kabelloses Netzwerk, wie z.B. ein WLAN handeln. Es ist jedoch auch möglich, dass das Netzwerk oder zumindest ein Teilabschnitt der Übertragungsstrecke in dem Netzwerk als ein öffentliches Netzwerk, insbesondere ein Internet, ausgebildet ist.

Die Anzeigeeinrichtung ist ausgebildet, in einer zweiten Bilddarstellung den IST-Bildausschnitt zumindest abschnittsweise lagerichtig und größenrichtig in dem SOLL-Auswahlbereich anzuzeigen und in einer weiteren Bilddarstellung den SOLL-Bildausschnitt lagerichtig und größenrichtig in dem SOLL-Auswahlbereich anzuzeigen. In der zweiten Bilddarstellung zeigt der SOLL-Bildausschnitt somit zumindest einen Teilabschnitt des IST-Bildausschnitts an. Für die lage- und größenrichtige Anzeige des Teilabschnitts in dem SOLL-Auswahlbereich wird dieser vorzugsweise entsprechend der Verlagerung und/oder Skalierung von dem IST-Auswahlbereich zum SOLL-Auswahlbereich abgebildet. Insbesondere bildet der Teilabschnitt zumindest einen Abschnitt eines Überschneidungsbereichs des IST- und des SOLL-Bildausschnitts.

Im Rahmen der Erfindung wird vorgeschlagen, dass der IST-Bildausschnitt und der SOLL-Bildausschnitt von unterschiedlichen Bildern einer Bildersequenz stammen. Unter der Bildersequenz ist insbesondere ein Bewegtbild oder eine Sequenz von unterschiedlichen Bildern zu verstehen. Bei den unterschiedlichen Bildern handelt es sich vorzugsweise um Einzelbilder als fortlaufende Bildfolge in einem bestimmten Zeitabschnitt der Bildersequenz. Die Bilder der Bildersequenz definieren vorzugsweise das Bildkoordinatensystem. Besonders bevorzugt wird die Bildersequenz von mindestens einer Überwachungskamera erfasst.

Ein Vorteil der Erfindung ist die Möglichkeit, von der Bildersequenz einen SOLL-Bildausschnitt auswählen zu können. Somit ist es dem Benutzer erlaubt, nicht lediglich die Gesamtgröße der Bildersequenz, sondern ebenfalls Teilbereiche auszuwählen und zu betrachten. Eine übersichtliche Darstellung von Bildausschnitten der Bildersequenz ist somit gewährleistet. Ein weiterer Vorteil ergibt sich durch die zwischenzeitliche Anzeige der angewählten Lage und Größe des Teilabschnitts des IST-Bildausschnitts in dem SOLL-Auswahlbereich bis zur Anzeige des SOLL-Bildausschnitts. Einerseits wird dem Benutzer dadurch bereits bei der zweiten Bilddarstellung die Verlagerung und/oder Skalierung des Teilabschnitts angezeigt, so dass der Vorgang seines angewählten SOLL-Bildausschnitts für ihn sofort erkennbar ist. Andererseits liegt dem Benutzer durch die zwischenzeitliche Anzeige des Teilabschnitts stets ein Bild zur Betrachtung vor, so dass die Latenz, beginnend bei der Auswahl des SOLL-Bildausschnitts bis zur Anzeige des SOLL-Bildausschnitts, für den Benutzer überbrückt wird. Die Überbrückung der Latenz erweist sich insbesondere bei großen Datenmengen der Bildersequenz und/oder bei einem niedrigbandbreitigen Netzwerk als sinnvoll. Eine stetige, schnelle Umsetzung der Befehlseingabe wird dem Benutzer auf diese Weise aufgezeigt.

In einer bevorzugten Ausführungsform ist die Anzeigeeinrichtung dazu ausgebildet, bei mindestens einer, der weiteren Bilddarstellung vorgeschalteten Zwischenbilddarstellung, ein ZWISCHEN-Bildausschnitt zumindest abschnittsweise lagerichtig und größenrichtig in dem SOLL-Auswahlbereich anzuzeigen. Der ZWISCHEN-Bildausschnitt bildet zumindest abschnittsweise einen zum IST-Bildausschnitt aktualisierten und/oder ergänzten Bildausschnitt. Insbesondere bildet der Teilabschnitt des ZWISCHEN-Bildausschnitts, welcher in dem SOLL-Auswahlbereich anzuzeigen ist, den aktualisierten und/oder ergänzten Bildausschnitt. Der IST-Bildausschnitt und der mindestens eine ZWISCHEN-Bildausschnitt stammen somit von unterschiedlichen Bildern der Bildersequenz. Des Weiteren stammen der mindestens eine ZWISCHEN-Bildausschnitt und der SOLL-Bildausschnitt jeweils von unterschiedlichen Bildern der Bildersequenz. Somit ist dem IST-, dem mindestens einen ZWISCHEN- und dem SOLL-Bildausschnitt jeweils ein Bild der Bildersequenz zugeordnet. Bei der mindestens einen Zwischenbilddarstellung handelt es sich vorzugsweise um mindestens eine automatisierte Anzeige.

In einer möglichen Umsetzung der Erfindung ist die lage- und größenrichtige Anzeige des SOLL-Bildausschnitts in dem SOLL-Auswahlbereich mittels Metadaten gesteuert. Die Metadaten sind Angaben zur Lage der Bilder, insbesondere des IST-Bildabschnitts, des ZWISCHEN-Bildabschnitts und/oder des SOLL-Bildabschnitts, in dem Bildkoordinatensystem. Vorzugsweise ist die Kommunikationseinrichtung ausgebildet, die Metadaten gemeinsam mit dem SOLL-Bildausschnitt zu empfangen. Die Anzeigeeinrichtung ist insbesondere ausgebildet, die durch die Kommunikationseinrichtung empfangenen Metadaten für die Anzeige des SOLL-Bildausschnitts auf dem Bildschirm zu verarbeiten. Zur Verschiebung des IST-Auswahlbereichs zum SOLL-Auswahlbereich ist bei einer bevorzugten Ausführung der Erfindung die Auswahleinrichtung dazu ausgebildet, die Auswahl des SOLL-Auswahlbereichs durch ein interaktives Verschieben eines ausgewählten Bildpunkts des IST-Bildausschnitts umzusetzen, wobei der IST-Bildausschnitt gemeinsam mit dem ausgewählten Bildpunkt verschoben wird, um den IST-Bildausschnitt zumindest abschnittsweise in dem SOLL-Auswahlbereich anzuzeigen. Bei dem interaktiven Verschieben erfolgt somit eine Relativverschiebung des IST-Auswahlbereichs zum SOLL-Auswahlbereich in dem Bildkoordinatensystem.

Zur Skalierung des IST-Auswahlbereich ist bei einer alternativen oder optionalen Ergänzung die Auswahleinrichtung dazu ausgebildet, die Auswahl des SOLL-Auswahlbereichs durch ein interaktives Verschieben von zwei ausgewählten Bildpunkten des IST-Bildausschnitts umzusetzen, wobei der IST-Bildausschnitt in Abhängigkeit der Position der zwei ausgewählten Bildpunkten skaliert wird, um den IST-Bildausschnitt zumindest abschnittsweise in dem SOLL-Bildausschnitt anzuzeigen. Bei dem interaktiven Verschieben der zwei ausgewählten Bildpunkten erfolgt somit eine zumindest abschnittsweise Vergrößerung oder Verkleinerung des IST-Bildausschnitts. Bei einer Vergrößerung der Entfernung der zwei ausgewählten Bildpunkte erfolgt vorzugsweise eine abschnittsweise Vergrößerung des IST-Bildausschnitts. Bei einer Verkleinerung der Entfernung der zwei ausgewählten Bildpunkte erfolgt vorzugsweise eine abschnittsweise Verkleinerung des IST-Bildausschnitts. Bei der abschnittsweisen Vergrößerung des IST-Bildausschnitts zeigt der SOLL-Auswahlbereich in Relation zu dem IST-Auswahlbereich einen kleineren Bildausschnitt aus dem Bildkoordinatensystem. Der eine bzw. die zwei ausgewählten Bildpunkte bilden somit den Befehlsgeber für die Festlegung des SOLL-Auswahlbereichs.

Für das interaktive Verschieben ist die Auswahleinrichtung beispielsweise als eine Maus, eine Tastatur oder einen Trackball ausgebildet. Besonders bevorzugt ist die Auswahleinrichtung als ein Touchscreen ausgebildet. Bei oder während der Verschiebung des ausgewählten Bildpunkts bzw. der ausgewählten Bildpunkte ist dieser bzw. sind diese stets an der positionierten Stelle z. B. des Mauszeigers auf dem Bildschirm, besonders bevorzugt des Fingers bzw. der Finger auf dem Touchscreen angeordnet. Der Touchscreen kann hierbei in der Clientvorrichtung integriert sein, insbesondere ist der Bildschirm mit dem Touchscreen ausgestattet. Das Auswählen des einen Bildpunkts bzw. der zwei Bildpunkte erfolgt z. B. durch eine einfache bzw. eine Multitouchbewegung des Touchscreens. Die Befehlseingabe zur Auswahl des SOLL-Auswahlbereichs ausgehend von dem IST-Auswahlbereich erfolgt vorzugsweise durch genau eine Touchbewegung des Touchscreens.

Eine bevorzugte konstruktive Umsetzung der Erfindung sieht vor, dass die Clienteinrichtung als eine mobile Empfangseinheit, insbesondere als ein Tablet oder als ein Mobiltelefon ausgebildet ist. Tablets und Mobiltelefone sind für einen Benutzer meist intuitiv bedienbar und erleichtern somit die Auswahl des SOLL-Bildausschnitts.

Einen weiteren Gegenstand der Erfindung betrifft ein Überwachungssystem mit einer Clientvorrichtung nach der vorhergehenden Beschreibung. Das Überwachungssystem dient zur Überwachung eines Raums, Gebäudes, öffentlichen Platzes o.ä.. Das Überwachungssystem umfasst vorzugsweise mindestens einen Server, welcher die Bildersequenz aufweist und zur Ausgabe des SOLL-Bildausschnitts an die Kommunikationseinrichtung ausgebildet ist. Bei dem Server handelt es sich z. B. um einen Videospeicher. Insbesondere ist der Server zum Empfang der Anforderung der Kommunikationseinrichtung ausgebildet. Die empfangene Anforderung wird durch den Server ausgewertet, woraufhin der SOLL-Bildausschnitt des SOLL-Auswahlbereichs an die Kommunikationseinrichtung gemeinsam mit Metadaten, welche insbesondere die Bildkoordinatenpunkte des SOLL-Bildausschnitts angeben, ausgegeben wird. Allgemeiner formuliert wird jeder Bildausschnitt von dem Server gemeinsam mit Metadaten, die dem Bildausschnitt zugeordnet sind, an die Clienteinrichtung gesendet, wobei die Metadaten die Position des zugeordneten Bildausschnitts in dem Bildkoordinatensystem umfassen.

In einer bevorzugten Ausführungsform ist der Server mindestens einer oder genau einer, zwei, drei oder einer Mehrzahl an Überwachungskameras zugeordnet, welche jeweils eine Bildersequenz erfassen. Diese Ausgestaltung hat den Vorteil, auch eine Mehrzahl an Räumen, Gebäuden, Plätzen o. ä. überwachen zu können. Sind dem Server mindestens zwei Überwachungskameras zugeordnet, ist vorzugsweise ein Umschalten auf eine der Kameras über die Clientvorrichtung möglich, so dass ein Umschalten auf eine andere Bildersequenz erfolgt.

Die Bildersequenz ist zum Beispiel als eine gespeicherte Videoaufnahme, jedoch bevorzugt als eine Live-Aufnahme ausgebildet, welche durch die eine bzw. durch eine der Überwachungskameras erfasst wird. Bei der Life-Aufnahme handelt es sich um ein Echtzeitbild der Überwachungskamera.

Einen weiteren Gegenstand der Erfindung betrifft ein Verfahren zur Bedienung einer Clientvorrichtung oder des Überwachungssystems, wobei in einer ersten Bilddarstellung ein IST-Bildausschnitt in einem IST-Auswahlbereich auf einem Bildschirm dargestellt wird, wobei nachfolgend ein SOLL-Auswahlbereich ausgewählt wird und wobei nachfolgend in einer zweiten Bilddarstellung der IST-Bildausschnitt zumindest abschnittsweise und in der weiteren Bilddarstellung ein SOLL-Bildausschnitt des SOLL-Auswahlbereichs lagerichtig und größenrichtig in dem SOLL-Auswahlbereich angezeigt wird. Insbesondere ist die Clienteinrichtung wie zuvor beschreiben ausgebildet. Im speziellen ist das Verfahren zur zuvor beschriebenen Betriebsweise der Clienteinrichtung ausgebildet.

Einen weiteren Gegenstand der Erfindung betrifft ein Computerprogramm mit Programmcode-Mitteln, um alle Schritte des genannten Verfahrens durchzuführen, wenn das Programm auf einem Computer und/oder der Clientvorrichtung ausgeführt wird.

Weitere Merkmale, Vorteile und Wirkungen der Erfindung ergeben sich aus der nachfolgenden Beschreibung bevorzugter Ausführungsbeispiele der Erfindung. Dabei zeigen:
- Figur 1: ein schematisches Blockdiagramm eines Überwachungssystems mit einer Clientvorrichtung als ein Ausführungsbeispiel der Erfindung;
- Figuren 2 und 3: jeweils eine schematische Darstellung zur Illustration der Funktionsweise des Überwachungssystems aus Figur 1;
- Figuren 4 und 5: jeweils eine schematische Darstellung zur Illustration der Funktionsweise der Clientvorrichtung aus Figur 1.

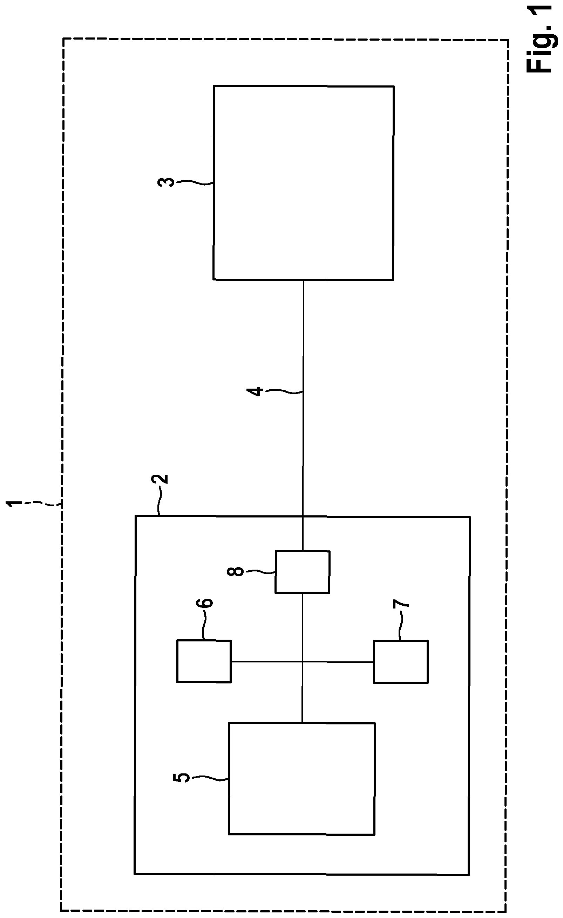

Die Figur 1 zeigt in einem schematischen Blockdiagramm ein Überwachungssystem 1, welches zur Überwachung eines beliebigen Überwachungsbereichs ausgebildet sein kann. Es kann sich auch um die Überwachung einer Konferenz etc. handeln. Besonders bevorzugt dient das Überwachungssystem 1 jedoch zur Überwachung von Überwachungsbereichen gegen ein unbefugtes Eindringen, Diebstahl, insbesondere Ladendiebstahl etc.

Das Überwachungssystem 1 umfasst eine oder mehrere Clientvorrichtungen 2 und eine oder mehrere Server 3. Der Server 3 ist mit der Clientvorrichtung 2 über ein Netzwerk 4 verbunden. Bei dem Netzwerk 4 handelt es sich z. B. um ein öffentliches Netzwerk, insbesondere ein Internet.

Der Server 3 umfasst mindestens eine Bildersequenz zu dem Überwachungsbereich, wobei die mindestens eine Bildersequenz von mindestens einer Überwachungskamera erfasst ist. Zur Betrachtung der mindestens einen Bildsequenz wird diese von dem Server 3 über das Netzwerk 4 zur Clientvorrichtung 2 übertragen.

Die Clientvorrichtung 2 kann als ein Personalcomputer ausgebildet sein, bevorzugt ist diese jedoch als ein mobiles Endgerät, insbesondere als ein Mobiltelefon oder ein Tablet ausgebildet.

Die Clientvorrichtung 2 weist einen Bildschirm 5 zur Darstellung der Bildsequenz auf. Der Bildschirm 5 wird durch eine Anzeigeeinrichtung 6 angesteuert, wobei die Anzeigeeinrichtung 6 zugleich die Steuerungseinrichtung der Clientvorrichtung 2 darstellen kann. Ferner umfasst die Clientvorrichtung 2 eine Auswahleinrichtung 7, die eine Mensch-Maschine-Schnittstelle zu der Clientvorrichtung 2 bildet und beispielsweise als ein berührungsempfindliches Feld auf dem Bildschirm 5 ausgebildet ist, sodass dies als ein Touchscreen realisiert ist. Ferner weist die Clientvorrichtung 2 eine Kommunikationseinrichtung 8 auf, welche ausgebildet ist, über das Netzwerk 4 mit dem Server 3 zu kommunizieren, wie dies nachfolgend noch dargestellt wird.

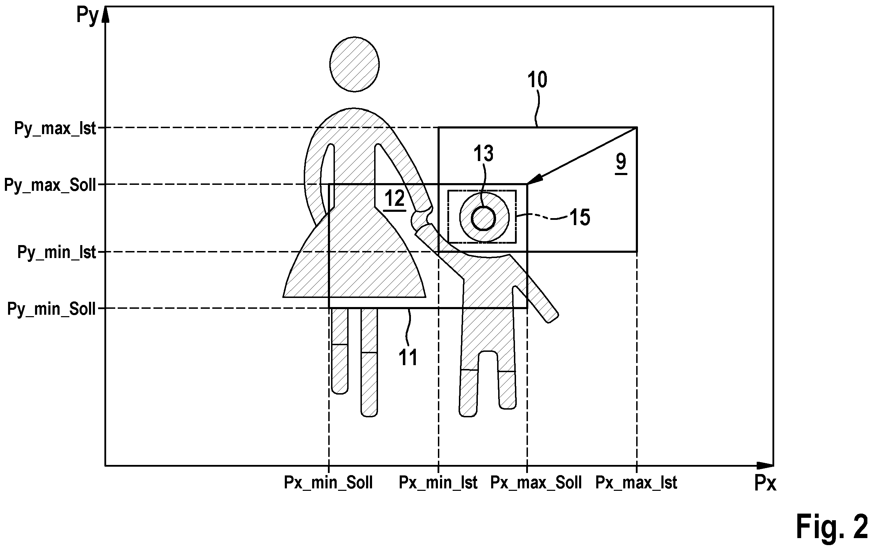

Anhand Figur 2 soll die Funktionsweise des Überwachungssystems 1 erläutert werden. Dargestellt ist ein durch die Überwachungskamera erfassten Bildes der Bildersequenz, welches durch ein Bildkoordinatensystem Pₓ, P_{y} definiert ist. Das Bildkoordinatensystem Pₓ, P_{y} ist als ein Pixelkoordinatensystem mit Achsen in Pixel aufgetragen und das Bild ist mit einer Bildauflösung von z. B. 1920x1080 ausgebildet.

Die Clientvorrichtung 2 ist dazu ausgebildet, auf dem Bildschirm 5 eine erste Bilddarstellung anzuzeigen. Die erste Bilddarstellung zeigt einen IST-Bildausschnitt 9 in einem IST-Auswahlbereich 10 aus dem Bildkoordinatensystem Pₓ, P_{y}. Bei dem IST-Bildausschnitt 9 handelt es sich um einen Teilbereich des erfassten Bildes der Bildersequenz, wobei der IST-Bildausschnitt 9 durch die Anordnung und Größe des IST-Auswahlbereichs 10 in dem Bildkoordinatensystem Pₓ, P_{y} bestimmt ist.

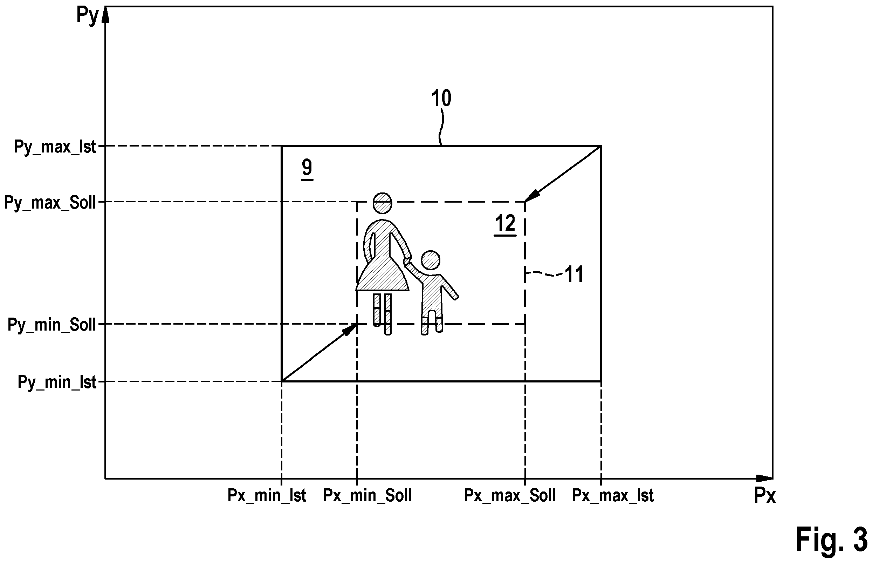

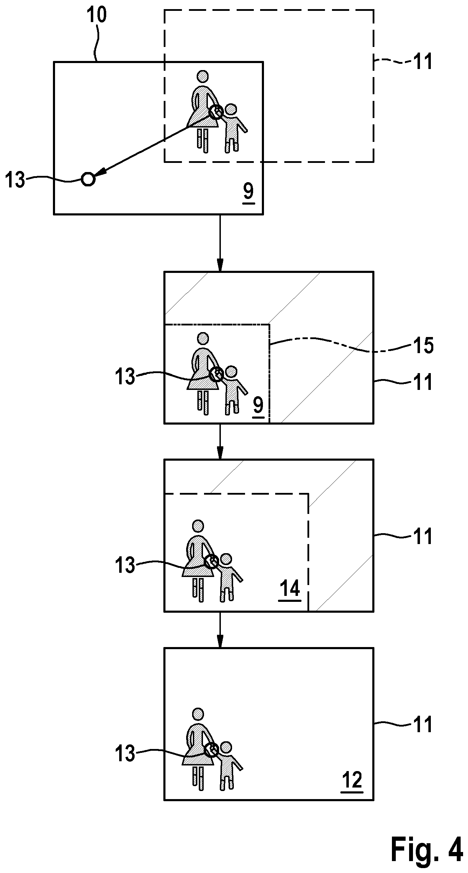

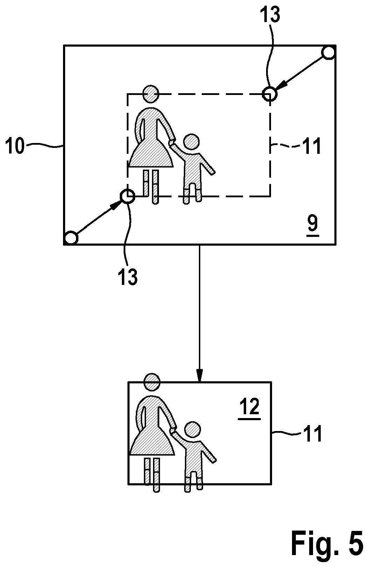

Dem Benutzer ist es über die Auswahleinrichtung 7 ermöglicht, für eine weitere Bilddarstellung einen SOLL-Auswahlbereich 11 auszuwählen. In dem SOLL-Auswahlbereich 11 wird in einer weiteren Bilddarstellung ein SOLL-Bildausschnitt 12 lagerichtig und größenrichtig in dem SOLL-Auswahlbereich 11 angezeigt. Der SOLL-Bildausschnitt 12 zeigt je in Abhängigkeit der Auswahl des Benutzers einen anderen Teilbereich des erfassten Bildes der Bildersequenz als den IST-Bildausschnitt 9. Bei der Auswahl des SOLL-Auswahlbereichs 11 kann es sich z. B. um eine Relativverschiebung des SOLL-Auswahlbereichs 11 zum IST-Auswahlbereich 10 in dem Bildkoordinatensystem Pₓ, P_{y} handeln. D. h., in dem Bildkoordinatensystem Pₓ, P_{y} ist der SOLL-Auswahlbereich 11 zum IST-Auswahlbereich 10 auf eine andere Position gewählt, wie in Figur 2 dargestellt und in Figur 4 noch näher erläutert wird. Alternativ oder ergänzend kann es sich bei der Auswahl des SOLL-Auswahlbereichs 11 um eine Skalierung, d. h. um eine Vergrößerung oder Verkleinerung, zum IST-Auswahlbereich 9 handeln, wie in Figur 3 dargestellt und in Figur 5 näher erläutert wird. Die Verschiebung des IST-Auswahlbereichs 10 zum SOLL-Auswahlbereich 11 ermöglicht dem Benutzer, sich verschiedene Teilbereiche des Bildes der Bildersequenz anzeigen zu lassen. Die Skalierung des IST-Auswahlbereichs 10 ermöglicht dem Benutzer, sich Teilbereiche des Bildkoordinatensystems Pₓ, P_{y} in unterschiedlicher Vergrößerung darstellen zu lassen.

Wählt der Benutzer den SOLL-Auswahlbereich 11, ist der SOLL-Bildausschnitt 12 durch den Server 3 zur Clientvorrichtung 2 zu übermitteln, um den SOLL-Bildausschnitt 12 auf dem Bildschirm 5 anzuzeigen. Hierzu wird die durch den Benutzer ausgewählte Position und/oder Skalierung des SOLL-Auswahlbereichs 11 in dem Bildkoordinatensystem Pₓ, P_{y} z. B. durch die Auswahleinrichtung 7 als Anforderung, insbesondere als Anforderungsdaten, erfasst. Diese Anforderung des SOLL-Bildausschnitts 12 wird an den Server 3 ausgegeben. Dieser wertet die Anforderung aus und gibt den SOLL-Bildausschnitt 12 gemeinsam mit Metadaten, z. B. als Bildkoordinatenpunkte des SOLL-Bildausschnitts an die Kommunikationseinrichtung 8 aus. Der SOLL-Bildausschnitt 12 wird daraufhin auf dem Bildschirm 5 der Clientvorrichtung 2 angezeigt.

Die Position und Skalierung des SOLL-Auswahlbereichs 11 wird beispielsweise mittels Bildkoordinatenpunkten erfasst. Die Erfassung der Position mittels Bildkoordinatenpunkten ist in Figur 2 und die Erfassung der Skalierung mittels Bildkoordinatenpunkten in Figur 3 dargestellt. Die Bildkoordinatenpunkte Pₓ__{min_Soll}, P_{x_max_Soll}, P_{y_min_Soll} und P_{y_max_Soll} benennen beispielsweise die Absolutposition bzw. Absolutskalierung des SOLL-Auswahlbereichs 11. Als beispielhafte Alternative wird mittels der Bildkoordinatenpunkte P_{x_min_Soll}, P_{x_max_Soll}, P_{y_min_Soll}, P_{y_max_Soll} und P_{x_min_Ist}, P_{x_max_Ist}, P_{y_min_Ist}, P_{y_max_Ist} die Relativverschiebung bzw. Relativskalierung des SOLL-Auswahlbereichs 11 zum IST-Auswahlbereich 10 bestimmt.

Anhand der Figuren 4 und 5 soll die Funktionsweise der Clientvorrichtung 2 bei der Auswahl des SOLL-Auswahlbereichs 11 beschrieben werden.

Figur 4 zeigt die Funktionsweise zur Auswahl einer auf dem Bildschirm 5 verlagerten Anzeige eines SOLL-Auswahlbereichs 11. Möchte der Benutzer sich einen anderen Teilbereich des Bildes als den IST-Bildausschnitt 9 anzeigen lassen, erfolgt die Auswahl z. B. über ein interaktives Verschieben eines ausgewählten Bildpunkts 13 im IST-Bildausschnitt 9. Durch das Verschieben des Bildpunkts 13 wird somit der SOLL-Auswahlbereich 11 bestimmt. Diese erste Bilddarstellung ist in der obersten Darstellung der Figur 4 gezeigt. Durch das Verschieben des Bildpunkts 13 erscheint dem Benutzer, dass aufgrund der Relativverschiebung des SOLL-Bildausschnitts 12 zum IST-Bildausschnitt 11 ein Teilabschnitt 15 auf dem Bildschirm 5 verlagert ist. Der Teilabschnitt 15 ist jedoch, wie in Figur 2 erkennbar, in dem Bildkoordinatensystem Pₓ, P_{y} stationär.

Ist der SOLL-Auswahlbereich 11 durch das Verschieben des Bildpunkts 13 bestimmt, wird in einer zweiten Bilddarstellung der IST-Bildausschnitt 9 zumindest abschnittsweise lagerichtig und größenrichtig in dem SOLL-Auswahlbereich 11 angezeigt. Die zweite Bilddarstellung ist in der zweiten Darstellung in Figur 4 gezeigt.

Bei diesem Ausführungsbeispiel folgt nach der zweiten Bilddarstellung eine Zwischenbilddarstellung, wobei in der Zwischenbilddarstellung ein ZWISCHEN-Bildausschnitt 14 zumindest abschnittsweise lagerichtig und größenrichtig in dem SOLL-Auswahlbereich 11 angezeigt wird. Ein derartige Zwischenbilddarstellung kann sich durch Verzögerungseffekte in Zusammenhang mit der Anforderung des SOLL-Bildausschnitts 12 ergeben. So ist es z.B. möglich, dass durch eine langsame Auswahlbewegung zunächst der ZWISCHEN-Bildausschnitt 14 und erst nachfolgend der SOLL-Bildausschnitt 12 angefordert wird. Um die übertragenen Bilddaten des ZWISCHEN-Bildausschnitts 14 sinnvoll zu verwerten, werden diese lagerichtig und größenrichtig in dem SOLL-Auswahlbereich 11 angezeigt. Der ZWISCHEN-Bildausschnitt 14 bildet zumindest abschnittsweise einen zum IST-Bildausschnitt 9 aktualisierten und/oder ergänzten Bildausschnitt. Der IST-Bildausschnitt 9 und der ZWISCHEN-Bildausschnitt 14 stammen z. B. von unterschiedlichen Bildern der Bildersequenz. Diese Situation ist in der dritten Darstellung der Figur 4 gezeigt.

In der weiteren Bilddarstellung ist der SOLL-Bildausschnitt 12 lagerichtig und größenrichtig in dem SOLL-Auswahlbereich 11 angezeigt. Dem IST-Bildausschnitt 9, dem ZWISCHEN-Bildausschnitt 14 und dem SOLL-Bildausschnitt 12 sind jeweils ein Bild der Bildersequenz zugeordnet. Die weitere Bilddarstellung ist in der vierten Darstellung der Figur 4 gezeigt.

Figur 5 zeigt die Funktionsweise der skalierten Auswahl eines SOLL-Auswahlbereichs 11 mit dem SOLL-Bildausschnitt 12. Bei diesem Ausführungsbeispiel wählt der Benutzer eine Vergrößerung des IST-Bildausschnitts 9. Die Auswahl des SOLL-Auswahlbereichs 11 erfolgt durch ein interaktives Verschieben von zwei ausgewählten Bildpunkten des IST-Bildausschnitts 9, wobei der IST-Bildausschnitt 9 in Abhängigkeit der Position der zwei ausgewählten Bildpunkten 13 skaliert wird, um den IST-Bildausschnitt zumindest abschnittsweise in dem SOLL-Bildausschnitt 12 anzuzeigen. Der Teilabschnitt 15 ist durch das Befehlsende des Benutzers, d. h. durch die Endpositionierung der Bildpunkte 13 in dem IST-Bildausschnitt 9 definiert.

Ist der SOLL-Auswahlbereich 11 bestimmt, wird in einer zweiten Bilddarstellung der IST-Bildausschnitt 9 zumindest abschnittsweise lagerichtig und größenrichtig in dem SOLL-Auswahlbereich 11 und in der weiteren Bilddarstellung der SOLL-Bildausschnitt 12 lagerichtig und größenrichtig in dem SOLL-Auswahlbereich 11 angezeigt, wobei der IST-Bildausschnitt 9 und der SOLL-Bildausschnitt 12 von unterschiedlichen Bildern der Bildersequenz stammen. Vorzugsweise werden die Bildkoordinatenpunkte durch den Server 3 bei einer Vergrößerung des IST-Bildausschnitts 9 hochskaliert und bei einer Verkleinerung entsprechend der Bildauflösung der Clientvorrichtung 2 herunterskaliert, um eine optimale und schnellstmögliche Bildanzeige des SOLL-Bildausschnitts 12 auf der Clientvorrichtung 2 zu erzielen. Auch bei einer Skalierung kann ein ZWISCHEN-Bildausschnitt 14 angefordert werden, der dann in gleicher Weise wie in der Figur 4 lagerichtig und größenrichtig in dem SOLL-Auswahlbereich 11 angezeigt wird.

## Patentansprüche

1. Clientvorrichtung (2)
mit einem Bildschirm (5),
mit einer Anzeigeeinrichtung (6) zur Anzeige einer ersten Bilddarstellung auf dem Bildschirm (5), wobei die Anzeigeeinrichtung (6) eine Steuerungseinrichtung der Clientvorrichtung (2) bildet, wobei die erste Bilddarstellung einen IST-Bildausschnitt (9) eines Bildes zeigt, wobei der IST-Bildausschnitt einen Teilbereich eines in einem Bildkoordinatensystem abgebildeten Bilds zeigt, wobei der Teilbereich des IST-Bildausschnitts durch einen im Bildkoordinatensystem angeordneten IST-Auswahlbereich (10) bestimmt ist, wobei der IST-Bildausschnitt (9) durch die Anordnung und Größe des IST-Auswahlbereichs (10) in dem Bildkoordinatensystem (Pₓ, P_{y}) bestimmt ist, und wobei das Bildkoordinatensystem (Pₓ, P_{y}) durch das Bild definiert ist,
mit einer Auswahleinrichtung (7), wobei die Auswahleinrichtung (7) zur Auswahl eines SOLL-Auswahlbereichs (11) aus dem Bildkoordinatensystem (Pₓ, P_{y}) durch einen Benutzer ausgebildet ist,
mit einer Kommunikationseinrichtung (8), wobei die Kommunikationseinrichtung (8) zur Anforderung und zum Empfang eines SOLL-Bildausschnitts (12) eines Bildes ausgebildet ist, wobei der SOLL-Bildausschnitt einen Teilbereich des im Bildkoordinatensystem abgebildeten Bildes zeigt, wobei durch den im Bildkoordinatensystem angeordneten SOLL-Auswahlbereich (11) der SOLL-Bildausschnitt bestimmt wird,
wobei der IST-Bildausschnitt (9) und der SOLL-Bildausschnitt (12) von unterschiedlichen Bildern einer von mindestens einer Überwachurigskamera erfassten Bildersequenz stammen
**dadurch gekennzeichnet, dass**
die Anzeigeeinrichtung (6) ausgebildet ist, in einer zweiten Bilddarstellung den IST-Bildausschnitt (9) lagerichtig und größenrichtig in dem SOLL-Auswahlbereich (11) anzuzeigen und in einer weiteren Bilddarstellung den SOLL-Bildausschnitt (12) lagerichtig und größenrichtig in dem SOLL-Auswahlbereich (11) anzuzeigen,

2. Clientvorrichtung (2) nach Anspruch 1, **dadurch gekennzeichnet, dass** die Anzeigeeinrichtung (6) ausgebildet ist, bei mindestens einer, der weiteren Bilddarstellung vorgeschalteten Zwischenbilddarstellung, einen ZWISCHEN-Bildausschnitt (14) lagerichtig und größenrichtig in dem SOLL-Auswahlbereich (11) anzuzeigen.

3. Clientvorrichtung (2) nach einem der vorhergehenden Ansprüche, **dadurch gekennzeichnet, dass** die Kommunikationseinrichtung ausgebildet ist, Metadaten zu empfangen, wobei die lage- und größenrichtige Anzeige des SOLL-Bildausschnitts (12) in dem SOLL-Auswahlbereich (11) mittels Metadaten gesteuert ist, wobei die Metadaten Angaben zur Lage des IST-Bildabschnitts, des ZWISCHEN-Bildabschnitts und/oder des SOLL-Bildabschnitts in dem Bildkoordinatensystem sind.

4. Clientvorrichtung (2) nach Anspruch 3, **dadurch gekennzeichnet, dass** die Metadaten Bildkoordinatenpunkte des Bildkoordinatensystems (Pₓ, P_{y}) bilden.

5. Clientvorrichtung (2) nach einem der vorhergehenden Ansprüche, **dadurch gekennzeichnet, dass** die Auswahleinrichtung (7) ausgebildet ist, die Auswahl des SOLL-Auswahlbereichs (11) durch ein interaktives Verschieben eines ausgewählten Bildpunkts (13) des IST-Bildausschnitts (9) umzusetzen, wobei der IST-Bildausschnitt (9) gemeinsam mit dem ausgewählten Bildpunkt (13) verschoben wird, um den IST-Bildausschnitt (9) zumindest abschnittsweise in dem SOLL-Auswahlbereich (11) anzuzeigen.

6. Clientvorrichtung (2) nach einem der vorhergehenden Ansprüche, **dadurch gekennzeichnet, dass** die Auswahleinrichtung (7) ausgebildet ist, die Auswahl des SOLL-Auswahlbereichs (11) durch ein interaktives Verschieben von zwei ausgewählten Bildpunkten (13) des IST-Bildausschnitts (9) umzusetzen, wobei der IST-Bildausschnitt (9) in Abhängigkeit der Position der zwei ausgewählten Bildpunkten (13) skaliert wird, um den IST-Bildausschnitt (9) zumindest abschnittsweise in dem SOLL-Bildausschnitt (12) anzuzeigen.

7. Clientvorrichtung (2) nach einem der vorhergehen Ansprüche , **dadurch gekennzeichnet, dass** die Auswahleinrichtung (7) als ein Touchscreen ausgebildet ist.

8. Clientvorrichtung (2) nach einem der vorhergehenden Ansprüche, **dadurch gekennzeichnet, dass** die Anzeigeeinrichtung (6) als ein Mobiltelefon oder als ein Tablet ausgebildet ist.

9. Überwachungssystem (1) mit einer Clientvorrichtung (2) nach einem der vorhergehenden Ansprüche, **gekennzeichnet durch** einen Server (3), wobei der Server (3) die Bildersequenz aufweist und zur Ausgabe des SOLL-Bildausschnitts (12) ausgebildet ist.

10. Überwachungssystem (1) nach Anspruch 9, **dadurch gekennzeichnet, dass** der Server (3) mindestens einer Überwachungskamera zugeordnet ist, wobei die durch die mindestens eine Überwachungskamera erfasste Bildersequenz als eine Life-Aufnahme ausgebildet ist.

11. Verfahren zum Anzeigen von Bildern auf einem Bildschirm (5) der Clientvorrichtung (2) vorzugsweise nach einem der Ansprüche 1 bis 8, wobei in einer ersten Bilddarstellung ein IST-Bildausschnitt (9) in einem IST-Auswahlbereich (10) auf dem Bildschirm (5) dargestellt wird, wobei der IST-Bildausschnitt einen Teilbereich eines in einem Bildkoordinatensystem abgebildeten Bilds zeigt, wobei der Teilbereich des IST-Bildausschnitts durch einen im Bildkoordinatensystem angeordneten IST-Auswahlbereich (10) bestimmt ist, wobei der IST-Bildausschnitt (9) durch die Anordnung und Größe des IST-Auswahlbereichs (10) in dem Bildkoordinatensystem (Pₓ, P_{y}) bestimmt ist, und wobei das Bildkoordinatensystem (Pₓ, P_{y}) durch das Bild definiert ist,
wobei nachfolgend ein SOLL-Auswahlbereich (11) durch einen Benutzer ausgewählt wird und
wobei nachfolgend in einer zweiten Bilddarstellung der IST-Bildausschnitt (9) und in einer weiteren Bilddarstellung ein SOLL-Bildausschnitt (12) des SOLL-Auswahlbereichs (11) lagerichtig und größenrichtig in dem SOLL-Auswahlbereich (11) angezeigt wird und wobei der IST-Bildausschnitt (9) und der SOLL-Bildausschnitt (12) von unterschiedlichen Bildern einer Bildersequenz stammen.

12. Computerprogramm mit Programmcode-Mitteln, um alle Schritte des Verfahrens nach Anspruch 11 durchzuführen, wenn das Programm auf einem Computer oder der Clientvorrichtung (2) von jedem Beliebigen der Ansprüche 1 bis 10 ausgeführt wird.

## Claims

1. Client device (2)
having a screen (5),
having a display device (6) for displaying a first image display on the screen (5), the display device (6) forming a control device of the client device (2), the first image display showing an ACTUAL image section (9) of tan image, the ACTUAL image section showing a subarea of an image formed in an image coordinate system, the subarea of the ACTUAL image section being determined by an ACTUAL selection area (10) arranged in the image coordinate system, the ACTUAL image section (9) being determined by the arrangement and size of the ACTUAL selection area (10) in the image coordinate system (Pₓ, P_{y}), and the image coordinate system (Pₓ, P_{y}) being defined by the image,
having a selection device (7), the selection device (7) being designed to select a DESIRED selection area (11) from the image coordinate system (Pₓ, P_{y}) by a user, and
having a communication device (8), the communication device (8) being designed to request and receive a DESIRED image section (12) of an image, the DESIRED image section showing a subarea of the image formed in the image coordinate system, the DESIRED image section being determined by the DESIRED selection area (11) arranged in the image coordinate system,
the ACTUAL image section (9) and the DESIRED image section (12) originating from different images of an image sequence acquired by at least one monitoring camera,
**characterized in that**
the display device (6) is designed to display the ACTUAL image section (9) in a second image display in the correct position and at the correct size in the DESIRED selection area (11), and to display the DESIRED image section (12) in a further image display in the correct position and at the correct size in the DESIRED selection area (11).

2. Client device (2) according to Claim 1, **characterized in that** the display device (6) is designed to display an INTERMEDIATE image section (14) in the correct position and at the correct size in the DESIRED selection area (11) in the case of at least one intermediate image display upstream of the further image display.

3. Client device (2) according to one of the preceding claims, **characterized in that** the communication device is designed to receive metadata, the position-correct and size-correct display of the DESIRED image section (12) being controlled in the DESIRED selection area (11) by means of metadata, the metadata being data relating to the position of the ACTUAL image section, of the INTERMEDIATE image section and/or of the DESIRED image section in the image coordinate system.

4. Client device (2) according to Claim 3, **characterized in that** the communication the metadata form image coordinate points of the image coordinate system (Pₓ, P_{y}) .

5. Client device (2) according to one of the preceding claims, **characterized in that** the selection device (7) is designed to reposition the selection of the DESIRED selection area (11) by an interactive shift of a selected pixel (13) of the ACTUAL image section (9), the ACTUAL image section (9) being shifted in common with the selected pixel (13) in order to display the ACTUAL image section (9) at least partially in the DESIRED selection area (11).

6. Client device (2) according to one of the preceding claims, **characterized in that** the selection device (7) is designed to reposition the selection of the DESIRED selection area (11) by an interactive shift of two selected pixels (13) of the ACTUAL image section (9), the ACTUAL image section (9) being scaled as a function of the position of the two selected pixels (13) in order to display the ACTUAL image section (9) at least partially in the DESIRED image section (12).

7. Client device (2) according to one of the preceding claims, **characterized in that** the selection device (7) is designed as a touchscreen.

8. Client device (2) according to one of the preceding claims, **characterized in that** the display device (6) is designed as a cell phone or as a tablet.

9. Monitoring system (1) having a client device (2) according to one of the preceding claims, **characterized by** a server (3), the server (3) having the image sequence and being designed to output the DESIRED image section (12).

10. Monitoring system (1) according to Claim 9, **characterized in that** the server (3) is assigned to at least one monitoring camera, the image sequence acquired by the at least one monitoring camera being designed as a live picture.

11. Method for displaying images on a screen (5) of the client device (2), preferably according to one of Claims 1 to 8, in which an ACTUAL image section (9) is displayed in an ACTUAL selection area (10) on the screen (5) in a first image display, the ACTUAL image section showing a subarea of an image formed in an image coordinate system, the subarea of the ACTUAL image section being determined by an ACTUAL selection area (10) arranged in the image coordinate system, the ACTUAL image section (9) being determined by the arrangement and size of the ACTUAL selection area (10) in the image coordinate system (Pₓ, P_{y}), and the image coordinate system (Pₓ, P_{y}) being defined by the image,
in which a DESIRED selection area (11) is subsequently selected by a user, and
in which the ACTUAL image section (9) is subsequently displayed in a second image display, and a DESIRED image section (12) of the DESIRED selection area (11) is displayed in the correct position and at the correct size in the DESIRED selection area (11) in a further image display, and in which the ACTUAL image section (9) and the DESIRED image section (12) originate from different images of an image sequence.

12. Computer program having program code means in order to carry out all the steps of the method according to Claim 11 when the program is executed on a computer or the client device (2) of any of Claims 1 to 10.

## Revendications

1. Arrangement client (2)
comprenant un écran (5),
comprenant un dispositif d'affichage (6) destiné à afficher une première représentation d'image sur l'écran (5), le dispositif d'affichage (6) formant un dispositif de commande de l'arrangement client (2), la première représentation d'image représentant une portion d'image RÉELLE (9) d'une image, la portion d'image RÉELLE représentant une zone partielle d'une image illustrée dans un système de coordonnées d'image, la zone partielle de la portion d'image RÉELLE étant définie par une zone de sélection RÉELLE (10) disposée dans le système de coordonnées d'image, la portion d'image RÉELLE (9) étant définie par la disposition et la taille de la zone de sélection RÉELLE (10) dans le système de coordonnées d'image (Pₓ, P_{y}), et le système de coordonnées d'image (Pₓ, P_{y}) étant défini par l'image,
comprenant un dispositif de sélection (7), le dispositif de sélection (7) étant configuré pour la sélection d'une zone de sélection DE CONSIGNE (11) à partir du système de coordonnées d'image (Pₓ, P_{y}) par un utilisateur,
comprenant un dispositif de communication (8), le dispositif de communication (8) étant configuré pour demander et pour recevoir une portion d'image DE CONSIGNE (12) d'une image, la portion d'image DE CONSIGNE représentant une zone partielle de l'image représentée dans le système de coordonnées d'image, la portion d'image DE CONSIGNE étant définie par la zone de sélection DE CONSIGNE (11) disposée dans le système de coordonnées d'image,
la portion d'image RÉELLE (9) et la portion d'image DE CONSIGNE (12) étant issues d'images différentes d'une séquence d'images acquise par au moins une caméra de surveillance,
**caractérisé en ce que**
le dispositif d'affichage (6) est configuré pour afficher, dans une deuxième représentation d'image, la portion d'image RÉELLE (9) en position correcte et à la taille correcte dans la zone de sélection DE CONSIGNE (11) et, dans une représentation d'image supplémentaire, afficher la portion d'image DE CONSIGNE (12) en position correcte et à la taille correcte dans la zone de sélection DE CONSIGNE (11).

2. Arrangement client (2) selon la revendication 1, **caractérisé en ce que** le dispositif d'affichage (6) est configuré pour, dans le cas d'au moins une représentation d'image intermédiaire qui précède la représentation d'image supplémentaire, afficher une portion d'image INTERMÉDIAIRE (14) en position correcte et à la taille correcte dans la zone de sélection DE CONSIGNE (11).

3. Arrangement client (2) selon l'une des revendications précédentes, **caractérisé en ce que** le dispositif de communication est configuré pour recevoir des métadonnées, l'affichage en position correcte et à la taille correcte de la portion d'image DE CONSIGNE (12) dans la zone de sélection DE CONSIGNE (11) étant commandé au moyen des métadonnées, les métadonnées étant des indications à propos de la position de la portion d'image RÉELLE, de la portion d'image INTERMÉDIAIRE et/ou de la portion d'image DE CONSIGNE dans le système de coordonnées d'image.

4. Arrangement client (2) selon la revendication 3, **caractérisé en ce que** les métadonnées forment des points de coordonnée d'image du système de coordonnées d'image (Pₓ, P_{y}).

5. Arrangement client (2) selon l'une des revendications précédentes, **caractérisé en ce que** le dispositif de sélection (7) est configuré pour convertir la sélection de la zone de sélection DE CONSIGNE (11) par un décalage interactif d'un pixel (13) sélectionné de la portion d'image RÉELLE (9), la portion d'image RÉELLE (9) étant décalée conjointement avec le pixel (13) sélectionné afin d'afficher la portion d'image RÉELLE (9) au moins par certaines portions dans la zone de sélection DE CONSIGNE (11).

6. Arrangement client (2) selon l'une des revendications précédentes, **caractérisé en ce que** le dispositif de sélection (7) est configuré pour convertir la sélection de la zone de sélection DE CONSIGNE (11) par un décalage interactif de deux pixels (13) sélectionnés de la portion d'image RÉELLE (9), la portion d'image RÉELLE (9) étant mise à l'échelle en fonction de la position des deux pixels (13) sélectionnés afin d'afficher la portion d'image RÉELLE (9) au moins par certaines portions dans la portion d'image DE CONSIGNE (12) .

7. Arrangement client (2) selon l'une des revendications précédentes, **caractérisé en ce que** le dispositif de sélection (7) est réalisé sous la forme d'un écran tactile.

8. Arrangement client (2) selon l'une des revendications précédentes, **caractérisé en ce que** le dispositif d'affichage (6) est réalisé sous la forme d'un téléphone mobile ou d'une tablette.

9. Système de surveillance (1) comprenant un arrangement client (2) selon l'une des revendications précédentes, **caractérisé par** un serveur (3), le serveur (3) possédant la séquence d'images et étant configuré pour délivrer en sortie la portion d'image DE CONSIGNE (12) .

10. Système de surveillance (1) selon la revendication 9, **caractérisé en ce qu'**au moins une caméra de surveillance est associée au serveur (3), la séquence d'images acquise par l'au moins une caméra de surveillance étant réalisée sous la forme d'un enregistrement en direct.

11. Procédé pour afficher des images sur un écran (5) de l'arrangement client (2), de préférence selon l'une des revendications 1 à 8,
une portion d'image RÉELLE (9) dans une zone de sélection RÉELLE (10) étant représentée sur l'écran (5) dans une première représentation d'image, la portion d'image RÉELLE représentant une zone partielle d'une image illustrée dans un système de coordonnées d'image, la zone partielle de la portion d'image RÉELLE étant définie par une zone de sélection RÉELLE (10) disposée dans le système de coordonnées d'image, la portion d'image RÉELLE (9) étant définie par la disposition et la taille de la zone de sélection RÉELLE (10) dans le système de coordonnées d'image (Pₓ, P_{y}), et le système de coordonnées d'image (Pₓ, P_{y}) étant défini par l'image,
une zone de sélection DE CONSIGNE (11) étant ensuite sélectionnée par un utilisateur et
ensuite, dans une deuxième représentation d'image, la portion d'image RÉELLE (9) et, dans une représentation d'image supplémentaire, une portion d'image DE CONSIGNE (12) de la zone de sélection DE CONSIGNE (11) étant affichées en position correcte et à la taille correcte dans la zone de sélection DE CONSIGNE (11), la portion d'image RÉELLE (9) et portion d'image DE CONSIGNE (12) étant issues d'images différentes d'une séquence d'images.

12. Programme informatique comprenant des moyens de code de programme en vue d'exécuter toutes les étapes du procédé selon la revendication 11, lorsque le programme est exécuté sur un ordinateur ou un arrangement client (2) selon l'une quelconque des revendications 1 à 10.
